# EUROPEAN PATENT SPECIFICATION

(11) **EP 2 164 854 B1**
(45) Date of publication and mention of the grant of the patent: **10.07.2013**
(21) Application number: 08774841.4
(22) Date of filing: 07.07.2008
(51) Int. Cl.: C07F 11/00, C07D 323/00, B01J 23/00

(54) **CATALYST FOR ALKYNE METATHESIS**
KATALYSATOR FÜR DIE ALKYNMETATHESE
CATALYSEUR POUR LA MÉTATHÈSE D'ALCYNES

(30) Priority: 11.07.2007 EP 07112300
(43) Date of publication of application: 24.03.2010
(73) Proprietor: Technische Universität Braunschweig, 38106 Braunschweig (DE)
(72) Inventor: TAMM, Matthias, 38106 Braunschweig (DE); BEER, Stephan, 80469 München (DE); BANNENBERG, Thomas, 38116 Braunschweig (DE)
(74) Representative: Taruttis, Stefan Georg
(86) International application number: PCT/EP2008/058791
(87) International publication number: WO 2009/007345

(56) References cited:
- BEER, STEPHAN ET AL: "Efficient room-temperature alkyne metathesis with well-defined imidazolin-2-iminato tungsten alkylidyne complexes" ANGEWANDTE CHEMIE, INTERNATIONAL EDITION , 46(46), 8890-8894 CODEN: ACIEF5; ISSN: 1433-7851, 2007, XP002497553
- SCHROCK, RICHARD R. ET AL: "Further studies of imido alkylidene complexes of tungsten, well-characterized olefin metathesis catalysts with controllable activity" ORGANOMETALLICS , 9(8), 2262-75 CODEN: ORGND7; ISSN: 0276-7333, 1990, XP002497554
- TONZETICH, ZACHARY J. ET AL: "Reaction of Phosphoranes with Mo(N-2,6-i-Pr2C6H3)(CHCMe3)[OCMe(CF3)2]2: Synthesis and Reactivity of an Anionic Imido Alkylidyne Complex" ORGANOMETALLICS , 25(18), 4301-4306 CODEN: ORGND7; ISSN: 0276-7333, 2006, XP002497555

## Description

The present invention relates to catalysts suitable for alkyne metathesis, to the use of catalysts in alkyne metathesis and to processes in the presence of the catalysts, e.g. synthesis or metathesis processes. The catalysts comprise a ligand, on his part containing a nitrogen which is forming a complex with a transition metal atom

Catalysts of the invention contain a metal atom which is coordinated by two alkoxy groups and one anionic electron donating ligand comprising a nitrogen atom. In the catalytically active form, the metal atom is bound to a substituted carbon by a triple bond. In use as alkyne metathesis catalysts, the compounds of the invention mediate transfer of the substituted carbon by formal transfer to or exchange with another carbon atom being linked by a triple bond, i.e. an alkyne, while maintaining the triple bond.

### State of the art

Tamm (Chem. Commun. 2004, 876-877) disclose the synthesis of titanium complexes having imidazolin-2-iminato ligands.

In Tamm et al. (Org. Biomol. Chem. 2007, 5, 523-530), the structure of 2-iminoimidazoline compounds is described.

Tamm et al. (Dalton Trans. 2006, 459-467) describe the synthesis of imidazolin-2-iminato titanium complexes and their use in ethylene polymerization catalysis.

Beer et al., Angewandte Chemie, International Edition, 46 (46), 8890-8894, 2007 describe a design strategy for the development of alkyne metathesis catalysts, disclosing tungsten alkylidyne complexes bearing imidazolin-2-imides as highly active alkyne metathesis catalysts.

Schrock et al., Organometallics 1990, 9, 2262-2275 describe the catalytic activity of imido alkylidene complexes of tungsten in the alkyne metathesis.

Tonzetich et al., Organometallics 2006, 25, 4301-4306 describe the synthesis of anionic imido alkylidyne complexes by reaction of molybdenum alkyliden complexes with phosphoranes.

Fürstner et al. (Chem. Commun. 2005, 2307-2320) describe alkyne metathesis using a molybdenum tris-amido complex.

When reviewing the metathesis catalysts for the conversion of alkenes and alkynes, Schrock et al. (Adv. Synth. Cat. 2007, 349, 55-77) describe molybdenum or tungsten tris-amido or tris-alkoxy compounds for use in metathesis catalysis of alkynes.

Fürstner in Angew. Chem. 2000, 112, 3140-3172, reviews tungsten and molybdenum alkylidene complexes and ruthenium carbene complexes as catalysts for olefin metathesis.

US 2006/0281938 A1 describes alkyne metathesis using a tris-amido metal complex.

Stoner et al. in J. Am. Chem. Soc. 112, 5651-5653 (1990) describe conjugated transition metal complexes M₂(CCR)₄(PMe₃)₄ comprising an alkynyl ligand and a trimethylphosphine ligand in each complex.

WO 99/40047 describes catalysts of the general type M (=CR1) (OR2)₃, wherein R1 can be alkyl, aryl, alkenyl, alkylthio, dialkylamino, and R2 can be e.g. alkyl, aryl, fluorine alkyl. Further, catalysts can be mixtures of M[N(R1)Ar]₃ with halogen compounds of the type R2₂ EX₂ or R3₃SiX with E = C or Si, X = halogen, and R3 = alkyl or aryl.

One disadvantage of catalytically active tris-amido molybdenum complexes, e.g. according to Fürstner et al. (Chem. Eur. J. 2001, 7, 5299-5317) or from WO 99/40047, is that these require a temperature of above 80 °C and catalyst concentrations of more than 5 to 10 mol-% for a moderate catalytic activity. Further, the known catalysts for alkyne metathesis are unstable as they are sensitive towards inactivation by oxidation or hydrolysis.

### Objects of the invention

In view of the known catalysts and processes for alkyne metathesis, it is an object of the present invention to provide compounds having an alternative structure for use as catalysts in alkyne metathesis and metathesis processes involving the use of the catalytically active compounds. Preferably, the compounds have a structure allowing a high efficiency of the metathesis reaction, preferably allowing metathesis reactions to occur at lower temperatures.

### General description of the invention

The above objects of the invention are attained by the catalytically active compounds of the invention, which comprise a nitrogen ligand that on his part is forming a complex with a transition metal atom. Formally, the nitrogen containing ligand is formally anionic or mononegative and binds with the metal atom. The monoanionic nitrogen ligand is, embodied as an imine, namely as a guanidinato group or, a phosphoraniminato group. One or both of the nitrogen atoms of the guanidinate core and the phosphate atom of the phosphoraniminato group, respectively , can be substituted with substituents being selected from hydrogen, alkyl, alkenyl, aromatic residues, optionally including hetero atoms, e.g. halogen atoms, preferably fluorine.

Further, substituents to the nitrogen atoms not participating in the metal complexing bond are linked to the metal complexing nitrogen atom by a double (C=C) bond.

The valences of the nitrogen atom of the nitrogen ligand which do not complex the transition metal form a double bond, e.g. with the carbon atom of the guanidinato group, or with the phosphor atom of the phosphoraniminato group.

In embodiments of the nitrogen ligand in the form of a phosphoraniminato group, the phosphor atom is preferably substituted with three different or identical moieties, e.g. selected from hydrogen, alkyl, alkenyl and aromatic residues.

In embodiments of the nitrogen ligand in the form of a guanidinato group, both the nitrogen atoms which are bound to the nitrogen atom complexing the transition metal atom are preferably substituted with different or identical moieties, e.g. selected from hydrogen, alkyl, alkenyl and aromatic residues, which residues optionally bind to both carbon atoms linked to the carbon atom of the guanidinato group, e.g. selected from CH₂-CH₂, C(H)=C(H), and C(Me)=(CMe).

In addition to the mononegative nitrogen ligand, the metal atom is complexed by two identical or different alkoxy or aryloxy groups, optionally substituted with halogen.

The catalytically active complex exhibits a carbon-metal triple bond, which is essential for alkyne metathesis reactions. The substituents to this carbon atom can be derivatized any way by any substituent moiety because this ligand moiety will be demerged during the metathesis reaction, and therefore does not initially participate in the alkyne metathesis.

The catalytically active compounds of the invention correspond to formula II or III.

The compounds according to formula II: 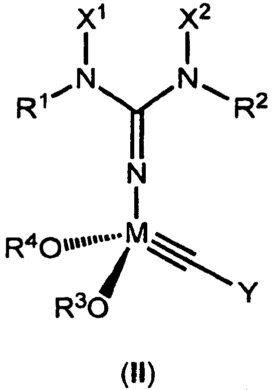
wherein M is a transition metal, preferably Mo or W,
R¹, R² are independently selected from hydrogen, C1 to C20 alkyl or aryl, optionally containing heteroatoms e.g. N, O, and/or S, preferentially methyl (Me), isopropyl (CHMe₂), tert-butyl (CMe₃), and aryl, preferentially 2,4,6-Me₃-C₆H₂, and 2,6-*i*Pr₂-C₆H₃, wherein *i*Pr is isopropyl and C₆H₃ is phenyl,
R³, R⁴ are selected from C1 to C20 alkyl or aryl, optionally containing heteroatoms, e.g. N, O, and/or S, preferentially CMe₃, CH(CF₃)₂, CMe₂CF₃, CMe(CF₃)₂, C(CF₃)₃, and aryl, preferentially 2,4,6-(CF₃)-C₆H₂, and 2,6-(CF₃)-C₆H₃, wherein C₆H₃ is phenyl,
X¹, X² are independently selected from H, C1 to C20 alkyl or aryl, preferentially both X¹ and X² are CH₂-CH₂, C(H)=C(H), or C(Me)=C(Me),
Y is selected from C1 to C20 alkyl and aryl, preferentially CMe₃ or phenyl (Ph).

One or both of X¹ and R¹, and of X² and R², respectively, can be linked, forming one common substituent to both the nitrogen atoms that do not participate in the complexing of the metal atom. For example, X¹ and X² can be replaced by a group comprising two, three or four atoms in a row, forming a 5-membered, a 6-membered or a 7-membered ring including the nitrogen atoms of the guanidinate core that do not participate in complexing the metal. Examples for groups replacing X¹ and X² are C-C, C=C, C-C-C, and C=C-C with each C substituted by one hydrogen, a halogen, or a (hetero-) alkyl.

Alternatively, X¹ and X² are carbon atoms being linked by single or double bond, an intermediate atom or a group of two atoms, e.g. the intermediate atom or group is selected from -CR¹-, -CR¹₂-CR¹₂-, and -CR¹=CR¹-, with each R¹ independently defined as above, preferably -CH=CH-, -C(CH₃)=C(CH₃)-.

Preferably, X¹ and X² in formula II are replaced by C=C with each C substituted by one hydrogen, a halogen, or a (hetero-) alkyl forming an optionally further substituted 2-imidazolyl substituent to the nitrogen atom that complexes the metal atom. As a result, the following structure IIa is obtained: 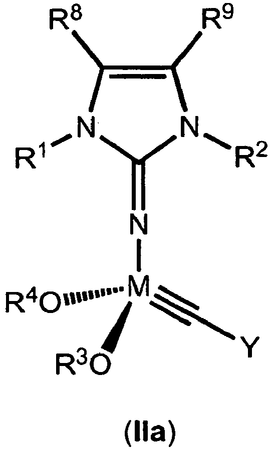
wherein R¹ and R² preferably are selected independently from electron donating groups, e.g. tert.-butyl, and wherein
R³ and R⁴ can each be selected independently from hydrogen, C1 to C20 (hetero-) alkyl or C3 to C20 (hetero-) aryl, preferably CMe₃, CH(CF₃)₂, CMe₂CF₃, CMe(CF₃)₂, and C(CF₃)₃, and
R⁸ and R⁹ can each be selected independently from hydrogen, C1 to C20 (hetero-) alkyl or C3 to C20 (hetero-) aryl, preferably CMe₃, CH(CF₃)₂, CMe₂CF₃, CMe(CF₃)₂, and C(CF₃)₃.

The compounds according to formula III: 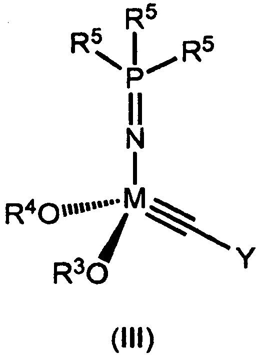
wherein substituents are as given for formula II, and
each R⁵ is independently selected from hydrogen, C1 to C20 alkyl, preferentially Me, and C₆H₁₁ (cyclohexyl), or aryl, preferentially phenyl.

In the catalytic processes, the compounds of the invention show the advantage that they catalyze alkyne metathesis reactions more efficiently, e.g. at lower temperatures than known catalysts, e.g. than tris-amido molybdenum complexes. Therefore, the catalysts of the invention are advantageous in use for synthetic reactions of temperature sensitive compounds.

The catalytically active compounds of the invention are advantageous in that they do not require an inert gas atmosphere during the catalysis reaction, but can be used at ambient, preferably at reduced pressure, e.g. in the range of 10 to 500 mbar. Further, the catalytic activities of the compounds of the invention are higher than those of prior art alkyne metathesis catalysts. Accordingly, the catalysts of the invention can be used at lower temperatures, e.g. in the range of 10 to 100 °C and/or at lower concentrations than previous catalysts.

In general, compounds used as catalysts in the present invention can be synthesized according to the methods described in Tamm et al., Dalton Trans. 2006, 459-467, preferably with replacement of titanium with molybdenum or tungsten.

### Detailed description of the invention

The invention is now described in greater detail by way of examples.

### Example 1: Synthesis of catalyst

First, 1,3-di-*tert.*-butylimino-2-imidazoline lithium (ImN)Li was synthesized by dissolving 1,3-di-*tert.*-butylimidazoline-2-imine (718 mg, 3.68 mmol) in 45 mL hexane in a 100 mL Schlenk tube and cooling to -30 °C. Over a period of 5 min, 2.1 mL of a hexane solution of methyllithium (1.6M, 3.4 mmol) was added and stirred for 2 h allowing the solution to warm to 0 °C. The resulting white suspension was filtered through a Schlenk frit, and the residue was washed 5 times with 10 mL of hexane. The remaining white powder was dried for 5 h at high vacuum to yield 762 mg (97 %) of pure product. ¹H NMR (200 MHz, C₆D₆, 25 °C): δ 1.58 (18 H, s, C(C*H*₃)₃), 6.11 (2 H, s, C*H*); ¹³C NMR (150.9 MHz, C₆D₆, 25 °C): δ 30.6 (3 C, s, C(CH₃)₃), 53.1 (2 C, s, N*C*Me₃), 106.6 (2 C, s, NCH), 141.1 (1 C, s, NCN); Found for C₁₁H₂₀N₃Li: C 65.2 %, H 10.3 %, N 19.8 %; Calculated: C 65.6 %, H 10.0 %, N 20.9 %.

The intermediary product corresponds to

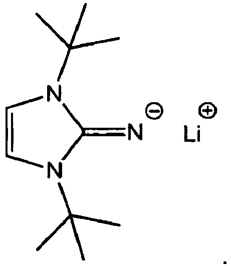

A toluene solution of (ImN)Li (190 mg, 0.944 mmol) was slowly added to the tungsten alkylidyne complex {Me₃CC≡W[OCMe(CF₃)₂]₃(dme)} (837 mg, 0.944 mmol), which was dissolved in a 100 mL Schlenk tube in 25 mL toluene and stirred for 10 min at room temperature. The yellow-orange suspension was filtered through an Schlenk frit to remove any by-products. Evaporation of the solvent gave the clean product as yellow crystalline powder. Single crystals could be obtained by cooling a saturated diisopropylether solution to -35 °C. Yield: 726 mg of yellow crystals (95%). ¹H NMR (400 MHz, C₆D₆, 25 °C): δ 1.15 (9 H, s, W≡CCC*H*₃), 1.29 (18 H, s, NCC*H*₃), 1.96 (6 H, br, C(C*H*₃)(CF₃)₂), 5.94 (2 H, s, C*H*); ¹³C NMR (150.9 MHz, C₆D₆, 25 °C.): δ 20.5 (2 C, s, OC*C*H₃), 28.7 (6C, s, NCCH₃), 33.8 (3 C, s, CCCH₃), 50.8 (²*J*_{CW} = 38 Hz, 1 C, O*C*CH₃), 51.7 (2 C, s, NCCH₃), 81.7 (2 C, m, O*C*CF₃), 110.0 (2 C, s, NC=CN), 124.1 (¹J_{CF} = 287 Hz, 2 C, q, *C*F₃), 124.8 (¹J_{CF} = 287 Hz, 2 C, q, *C*F₃), 159.4 (1 C, s, NCN), 285.6 (¹J_{CW} = 274 Hz, 1 C, s, W≡*C*); ¹⁹F NMR (376.5 MHz, C₆D₆, 25 °C): δ -78.6 (⁴*J*_{FF} = 19 Hz, 6 F, q, C*F*₃), -76.4 (⁴*J*_{FF} = 19 Hz, 6 F, q, C*F*₃); Found for C₂₄H₃₅N₃F₁₂O₂W: C 36.6 %, H 4.7 %, N 5.2 %; Calculated C 35.6 %, H 4.4 %, N 5.2 %. From the data, the following structure of the catalyst was deduced:

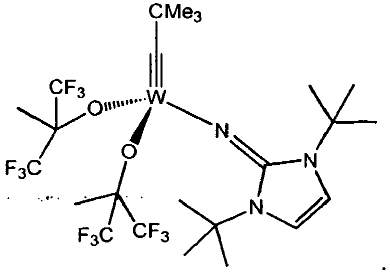

The alternative molybdenum-containing catalyst was synthesized using the respective molybdenum alkylidyne complex in the place of the tungsten alkylidyne complex.

### Example 2: Synthesis of catalyst

As described in Example 1, 1,3-di-*tert*.-butylimino-2-imidazoline lithium (ImN)Li was synthesized, and a toluene solution of (ImN)Li (173 mg, 0.860 mmol) was slowly added to the tungsten alkylidyne complex [Me₃CC≡W(OCMe₃)₃] (400 mg, 0.847 mmol), which was dissolved in a 100 mL Schlenk tube in 33 mL toluene and stirred for 120 min at room temperature. The yellow-orange suspension was filtered through an Schlenk frit to remove any by-products. Evaporation of the solvent and extraction with hexane gave the pure product as yellow crystalline powder. Single crystals could be obtained by cooling a saturated diisopropylether solution to -35 °C. Yield: 488 mg of yellow crystals (97%). ¹H NMR (400.1 MHz, C₆D₆, 25 °C): δ 1.43 (18 H, s, NC(C*H*₃)₃), 1.44 (9 H, s, W≡CC(C*H*₃)₃), 1.66 (18 H, s, OC(C*H*₃)₃), 6.03 (2 H, s, C*H*); ¹³C NMR (150.9 MHz, C₆D₆, 25 °C): δ 29.1 (6 C, s, NC(*C*H₃)₃), 33.5 (6C, s, OC*C*H₃), 34.6 (3 C, s, CC(*C*H₃)₃), 50.9 (1 C, s, C*C*(CH₃)₃), 55.9 (2 C, s, N*C*CH₃), 77.5 (2 C, s, O*C*CH₃), 108.5 (2 C, s, N*C*=*C*N), 159.1 (1 C, s, NCN), 273.3 (¹*J*_{CW} = 279 Hz, 1 C, s, W≡*C*); Found for C₂₄H₄₇N₃O₂W: C 47.8%, H 7.9%, N 6.3%; Calculated C 48.6%, H 8.0%, N 7.1 %.

From the analytical results, the following structure of the catalyst was deduced:

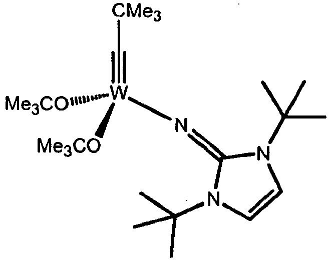

### Example 3: Synthesis of catalyst

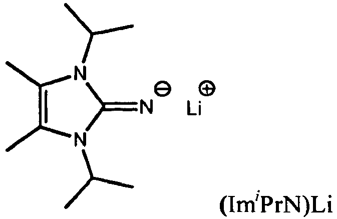

1,3-Di-iso-propyl-4,5-dimethylimidazoline-2-imine (Im*ⁱ*PrN) (1.689 g, 6.314 mmol) was dissolved in 20 mL hexane in a 100 mL Schlenk tube and cooled to -30 °C. Over a period of 10 min, 3.95 mL of a hexane solution of n-butyllithium (1.6M, 6.31 mmol) was added and stirred for 2 h allowing the solution to warm to 0 °C. The resulting white suspension was filtered through a Schlenk frit and the residue was washed 3 times with 10 mL of hexane. The remaining white powder was dried for 7 h at high vacuum giving 0.94 g (yield = 74 %) of pure product having the following analytical data: ¹H NMR (200 MHz, C₆D₆, 25 °C): δ 1.31 (12 H, d, CH(C*H*₃)₂), 1.98 (6 H, s, C*H*₃), 4.72 (2 H, sept, C*H*Me₂); ¹³C NMR (150.9 MHz, C₆D₆, 25 °C): δ 11.5 (2 C, s, *C*H₃), 22.9 (4 C, s, NCH(*C*H₃)₂), 45.1 (2 C, s, N*C*HMe₂), 112.8 (2 C, s, *C*=*C*), 147.8 (1 C, s, NCN); Found for C₁₁H₂₀N₃Li: C 65.2 %, H 10.3 %, N 19.8 %; Calculated: C 65.6 %, H 10.0 %, N 20.9 %.

Then, a toluene solution of (lm*ⁱ*PrN)Li (98 mg, 0.487 mmol) was slowly added to the tungsten alkylidyne complex {Me₃CC≡W[OCMe(CF₃)₂]₃(dme)} (430 mg, 0.485 mmol), which was dissolved in a 100 mL Schlenk tube in 23 mL toluene and stirred for 10 min at room temperature. The yellow-orange suspension was filtered through an Schlenk frit to remove any by-products. Evaporation of the solvent and extraction with hexane afforded 487 mg of the product as yellow powder (63%). ¹H NMR (400.1 MHz, C₆D₆, 25 °C): δ 1.14 (9 H, s, W≡CC(C*H*₃)₃), 1.16 (12 H, d, NCH(C*H*₃)₃), 1.46 (6 H, s, CC*H*₃), 1.94 (6 H, br, C(C*H*₃)(CF₃)₂), 4.37 (2 H, sept, NC*H*(CH₃)₃); ¹³C NMR (150.9 MHz, C₆D₆, 25 °C): δ 9.1 (2 C, s, CCH₃), 20.5 (4 C, s, NCH(*C*H₃)₂), 20.7 (2 C, s, OC(*C*H₃)₃), 33.8 (3 C, s, CC(*C*H₃)₃), 46.6 (2 C, s, N*C*HMe₂), 50.1 (1 C, s, C*C*CH₃), 81.0 (2 C, m, O*C*CF₃), 117.4 (2 C, s, N*C*=CN), 124.1 (¹J_{CF} = 287 Hz, 2 C, q, *C*F₃), 124.4 (¹J_{CF} = 287 Hz, 2 C, q, *C*F₃), 158.6 (1 C, s, NCN), 284.0 (¹*J*_{CW} = 277 Hz, 1 C, s, W=C); ¹⁹F NMR (376.5 MHz, C₆D₆, 25 °C): δ -78.6 (⁴*J*_{FF} = 18 Hz, 6 F, q, C*F*₃), -77.7 (⁴*J*_{FF} = 18 Hz, 6 F, q, C*F*₃); MS: 809 (M)

From the analytical results, the following structure of the catalyst was deduced:

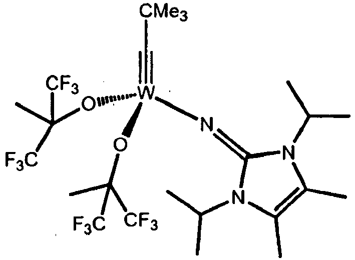

### Example 4: Synthesis of catalyst

A toluene solution of (Im*ⁱ*PrN)Li (149 mg, 0.741 mmol) was slowly added to the tungsten alkylidyne complex [Me₃CC≡W(OCMe₃)₃] (350 mg, 0.741 mmol), which was dissolved in a 100 mL Schlenk tube in 15 mL toluene and stirred for 120 min at room temperature. The yellow-orange suspension was filtered through an Schlenk frit to remove any by-products. Evaporation of the solvent and extraction with hexane gave the pure product as a yellow powder in 46% isolated yield.
¹H NMR (400.1 MHz, C₆D₆, 25 °C): δ 1.30 (12 H, d, NCH(C*H*₃)₂), 1.43 (9 H, s, W=CC(C*H*₃)₃), 1.58 (6 H, s, C*H*₃), (18 H, s, OC(C*H*₃)₃), 4.52 (2 H, sept, NC*H*); ¹³C NMR (150.9 MHz, C₆D₆, 25 °C): δ 9.6 (2 C, s, C*C*H₃), 21.4 (4 C, s, NCH(*C*H₃)₂), 33.5 (6C, s, OC(*C*H₃)₃), 34.9 (3 C, s, CC(*C*H₃)₃), 45.9 (2 C, s, N*C*HMe₂), 50.1 (1 C, s, C*C*CH₃), 76.7 (2 C, s, OCCH₃), 115.8 (2 C, s, N*C*=*C*N), 159.8 (1 C, s, NCN), 270.7 (¹*J*_{CW} = 281 Hz, 1 C, s, W≡*C*).

From the analytical results, the following structure of the catalyst was deduced:

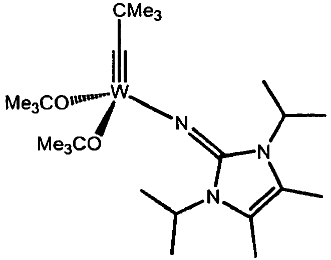

### Example 5: Alkyne metathesis of 1-phenylpropyne using_the catalyst

As an example for alkyne transfer reactions using the catalyst of the invention, a solution of 220 mg (1.894. 10⁻³ mol) of 1-phenylpropyne 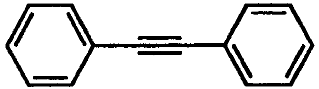 in 6 mL hexane and 1 mol% of catalyst obtained in Example 1 in hexane was stirred at room temperature under reduced pressure (350 mbar) to continuously remove 2-butyne. Filtration after 30 min through alumina and elution with hexane afforded the cross-metathesis product diphenylacetylene (tolane) in yields >90 %.

Analysis of the resultant product gave diphenylacetylene: ¹H NMR (200 MHz, CDCl₃, 25 °C): δ 7.34 (6 H, m, Ar), 7.53 (4 H, m, Ar); ¹³C NMR (50.3 MHz, CDCl₃, 25 °C): δ 89.4 (2 C, s, C≡C), 123.3 (2C, s, Ar), 128.3 (2 C, s, Ar), 128.3 (4 C, Ar), 131.6 (4 C, s, Ar); Found for C₁₄H₁₀: C 93.5 %, H 5.9 %; Calculated C 94.3 %, H 5.7 %.

### Example 6: Alkyne metathesis of 1-(2-methylphenyl)propyne using the catalysts

As an example for the high catalytic activity of the compounds of the invention in alkyne metathesis, the homodimerization of 1-phenylprop-1-yne was performed with a catalyst of the invention using standard equipment as the reaction could be performed at conditions at moderatedly elevated temperature and at moderately reduced pressure, namely in a rotary evaporator at 60 °C.

The stirred solution of 112 mg (0.861·10⁻³ mol) of 1-(2-methylphenyl)prop-1-yne in 10 mL hexane in the presence of 7.0 mg (0.864·10⁻⁵ mol) of catalyst obtained in Example 1 in hexane at 60 °C at reduced pressure (350 mbar) for 30 min, followed by filtration through alumina, elution with hexane, and evaporation of the solvent yielded 100% isolated bis-(2-methylphenyl)acetylene:

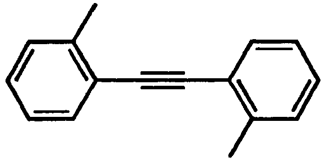

Analysis of the product gave bis-(2-methylphenyl)acetylene:¹H NMR (200.1 MHz, CDCl₃, 25 °C): δ 2.53 (3 H, s, C*H*₃), 2.53 (3 H, s, C*H*₃), 7.23 (6 H, m, Ar*H*), 7.50 (1 H, m, m-Ar*H*), 7.53 (1 H, m, m-Ar*H*); ¹³C NMR (50.3 MHz, CDCl₃, 25 °C): δ 20.9 (2 C, s, C*C*H₃), 92.3 (2 C, s, C=C), 123.4 (2 C, s, CC≡C), 125.6 (2 C, s, Ar), 128.2 (2 C, s, Ar), 129.5 (2 C, s, Ar), 131.9 (2 C, s, Ar), 140.0 (2 C, s, Ar); Found for C₁₆H₁₄: C 92.5 %, H 7.4 %; Calculated C 93.2 %, H 6.8 %.

When performing the reaction at room temperature under otherwise identical conditions, 100% yield was found after 7 h.

### Example 7: Ring-closing-metathesis using the catalyst

As an example for ring-closing-metathesis, a hexane solution of 6,15-dioxaeicosa-2,18-diyne (125.0 mg, 0.449 mmol) was added to a hexane solution of the catalyst obtained in Example 1 (7.3 mg, 4.49·10⁻⁵ mol, 2 mol%) and stirred for 2 h at room temperature under reduced pressure (350 mbar). Filtration through alumina and elution with hexane yielded the crude product after evaporation of the solvent. Pure product could be obtained by flash chromatography using hexane/ethylacetate 4:1 as the eluent in 95.1% yield as colorless syrup:

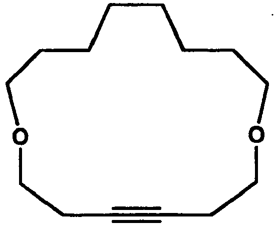

Analysis of the product gave: ¹H NMR (400.1 MHz, C₆D₆, 25 °C): δ 1.45 (4 H, m, C*H*₂), 1.54 (4 H, m, C*H*₂), 1.65 (4 H, m, C*H*₂), 2.27 (4 H, tt, C≡CC*H*₂), 3.25 (4 H, t, OC*H*₂), 3.31 (4 H, t, OC*H*₂); ¹³C NMR (50.3 MHz, C₆D₆, 25 °C): δ 20.9 (2 C, s, *C*H₂), 24.8 (2 C, s, *C*H₂), 27.7 (2 C, s, *C*H₂), 29.3 (2 C, s, *C*H₂), 69.1 (2 C, s, O*C*H₂), 70.0 (2 C, s, O*C*H₂), 79.0 (2 C, s, *C*≡*C*); Found for C₁₆H₁₄: C 72.9 %, H 10.7 %; Calculated C 74.9 %, H 10.8 %.
HR-MS (ESI): m/z 247.168 [M + Na]; GC-MS: m/z 223 (M)⁻, 209 (M -CH₂⁺),195 (M - C₂H₄), 181 (M -C₃H₇), 165 (M -C₃H₇O), 151 (M - C₄H₉O), 137 (M -C₅H₁₁O), 123 (M - C₆H₁₃O), 109 (M -C₇H₁₅O), 96 (M -C₈H₁₆O), 81 (M -C₈H₁₅O₂), 69 (M -C₉H₁₅O₂), 55 (M - C₁₁H₁₇O₂), 41 (M-C₁₂H₁₉O₂).

### Example 8: Ring-closing-metathesis using the catalyst

As a further example for the high catalytic activity of the compounds according to the invention, the following ring-closing reaction was performed:

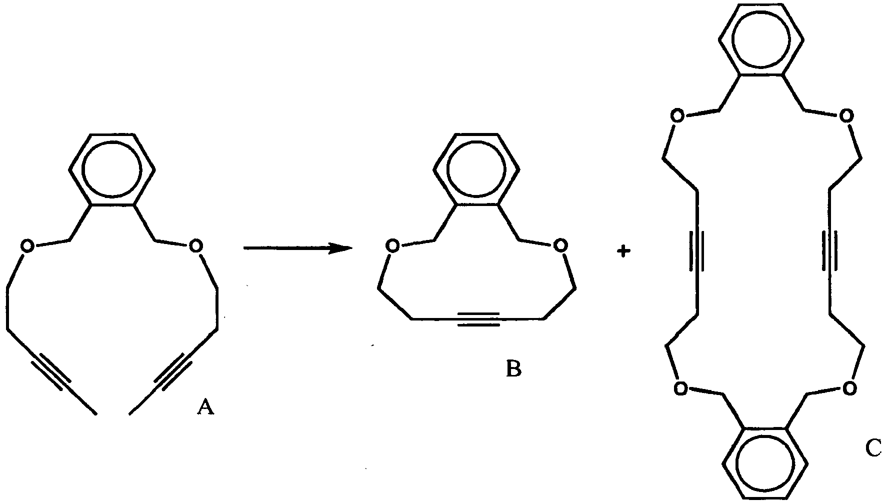

A 3.1 mM hexane solution of the diyne (A) (150.0 mg, 0.055 mmol) and 2 mol% catalyst obtained in Example 1 (9.0 mg, 1.11·10⁻⁵ mol) was stirred for 2 h at room temperature under reduced pressure (350 mbar). Filtration through alumina and elution with Et₂O afforded a mixture of monomeric (B) and dimeric (C) ring after evaporation of the solvent. Fractional crystallization from hexane yielded 19% of monomeric ring and 80% of dimeric ring, which is believed to be due to steric reasons.

For the monomeric ring (B) was found:
¹H NMR (200.1 MHz, CDCl₃, 25 °C): δ 2.41 (4 H, tt, C≡CC*H*₂), 3.73 (4 H, t, OC*H*₂), 4.87 (4 H, s, OC*H*₂), 7.33 (4 H, m, Ar*H*); ¹³C NMR (50.3 MHz, CDCl₃, 25 °C): δ 21.2 (2 C, s, C≡C*C*H₂), 68.4 (2 C, s, O*C*H₂), 71.7 (2 C, s, O*C*H₂), 80.9 (2 C, s, *C*≡*C*), 128.1 (2 C, s, Ar), 130.1 (4 C, s, Ar), 138.5 (4 C, s, Ar); MS (ESI): m/z 239.1 [M + Na].

For the dimeric ring (C) was found:
¹H NMR (200.1 MHz, CDCl₃, 25 °C): δ 2.50 (8 H, tt, C≡CC*H*₂), 3.62 (8 H, t, OC*H*₂), 4.68 (8 H, s, OC*H*₂), 7.33 (8 H, m, Ar*H*); ¹³C NMR (50.3 MHz, CDCl₃, 25 °C): δ 19.6 (4 C, s, C≡C*C*H₂), 68.5 (4 C, s, O*C*H₂), 70.3 (4 C, s, O*C*H₂), 77.7 (4 C, s, *C*≡*C*), 127.3 (4 C, s, Ar), 128.5 (4 C, s, Ar), 135.9 (4 C, s, Ar); Found for C₂₈H₃₂O₄: C 77.1%, H 7.3%; Calculated C 77.7%, H 7.5%; MS (ESI): m/z 455.2 [M + Na].

### Example 9: Synthesis of catalyst not according to the invention

As an example for a catalyst not according to the invention, the structure identified below was synthesized. A toluene solution of Li(NtBuAr)(OEt₂) obtainable e.g. according to Laplaza et al., Organometallics 577-580 (1995), (51 mg, 0.200 mmol) was added to the tungsten alkylidyne complex {Me3CC≡W[OCMe(CF3)2(dme)} (153 mg, 0.198 mmol), which was dissolved in 12 mL toluene and stirred for 30 min at room temperature. Evaporation of the solvent and any volatile by-products gave a light yellow residue. The powder was redissolved in 8 mL hexane and cooled to -35 °C for 6 h. Filtration and evaporation of the solvent gave the product as light yellow powder, which can be recrystallized from a cold hexane solution.
¹H NMR (400.1 MHz, C₆D₆, 25 °C): δ 0.66 (9 H, s, C(C*H*₃)₃),1.16 (9 H, s, C(C*H*₃)₃),1.73 (6 H, m, C(C*H*₃)(CF₃)₂), 2.13 (6 H, s, ArC*H*₃), 6.62 (1 H, m, Ar*H*), 6.70 (2 H, s, Ar*H*; ¹³C NMR (150.9 MHz, C₆D₆, 25 °C): δ 20.2 (s, OC*C*H3), 21.3 (s, ArCH₃), 28.7 (s, CC(*C*H₃)₃), 31.4 (s, C(*C*H₃)₃), 51.5 (²J_{CW} = 39 Hz, CCCH₃), 60.5 (s, N*C*Me₃), 81.9 (m, O*C*CF3), 123.9 (¹J_{CF} = 287 Hz, q, *C*F3), 124.2 (¹J_{CF} = 287 Hz, q, *C*F3), 126.2 (s, C aryl) 127.4 (s, C aryl meta), 128.3 (s, C aryl), 137.0 (s, C aryl meta), 159.2 (s, C aryl ipso), 298.2 (¹J_{CW} = 286 Hz, s, W=C); ¹⁹F NMR (376.5 MHz, C₆D₆, 25 °C): δ -78.8 (⁴J_{FF} = 18 Hz, 6 F, q, C*F*₃), -77.9 (⁴J_{FF} = 18 Hz, 6 F, q, C*F*₃); CHN: calcd. for C₂₅H₃₃NF₁₂O₂W: C 37.94 %, H 4.20 %, N 1.77 %;
found: C 36.97 %, H 4.66 %, N 2.11 %.

From the data, the following structure of the catalyst was deduced:

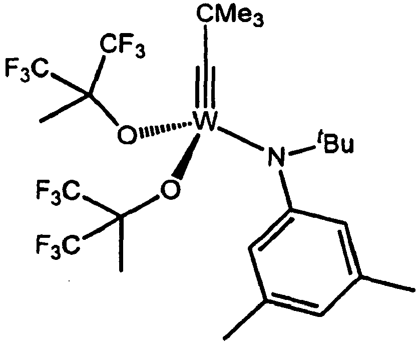

### Example 10: Synthesis of catalyst

As an example for a catylyst of the second embodiment, the structure identified below was synthesized. A toluene solution of Li(NPCy3) (68 mg, 0.230 mmol) (Cy = C6H11) was added to the tungsten alkylidyne complex {Me3CC≡W[OCMe(CF3)2(dme)} (200.6 mg, 0.230 mmol), which was dissolved in 10 mL toluene and stirred for 12 h at room temperature. Evaporation of the solvent and any volatile by-products gave a yellow residue. Washing the crude product several times with a minimum amount of hexane and subsequent evaporation of the solvent gave the product as yellow powder in 80 % yield.
¹H NMR (300.1 MHz, C₆D₆, 25 °C): δ 1.27 (9 H, s, C(C*H*₃)₃), 1.03-1.87 (33 H, m, C₆*H*₁₁), 1.92 (6 H, m, C(C*H*₃)(CF₃)₂); ¹³C NMR (75.5 MHz, C₆D₆, 25 °C): δ 20.4 (s, OCCH3), 25.8 (⁴J_{CP} = 1 Hz, d, Cy), 26.2 (³J_{CP} = 3 Hz, d, Cy), 26.6 (²J_{CP} = 12 Hz, d, Cy), 34.0 (⁵J_{CP} = 1 Hz, d, C*M*e3), 35.3 (¹J_{CP} = 57 Hz, d, Cy ipso-*C*), 49.4 (⁴J_{CP} = 1 Hz, C*C*Me₃), 80.8 (m, OCCF₃), 124.4 (¹J_{CF} = 287 Hz, q, CF3), 124.0 (¹J_{CF} = 287 Hz, q, *C*F₃), 285.8 (³J_{CP} = 7 Hz, d, W=C); ¹⁹F NMR (188.3 MHz, C₆D₆, 25 °C): δ -78.4 (⁴J_{FF} = 18 Hz, 6 F, q, C*F*₃), -77.6 (⁴J_{FF} = 18 Hz, 6 F, q, C*F*₃); ³¹P NMR (121.5 MHz, C₆D₆, 25 °C): δ 44.9 (²J_{PW} = 110 Hz, t, PCy3).

From the data, the following structure of the catalyst was deduced:

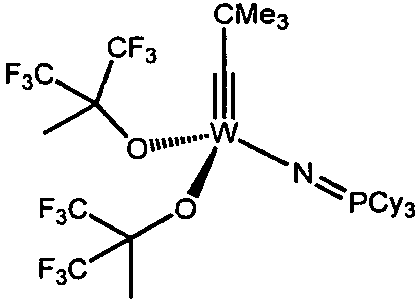

This catalyst could be used in the synthesis reaction according to Examples 5 to 8 with similar results.

## Claims

1. Compound having a structure of formula II or formula III for use in alkyne metathesis reactions: 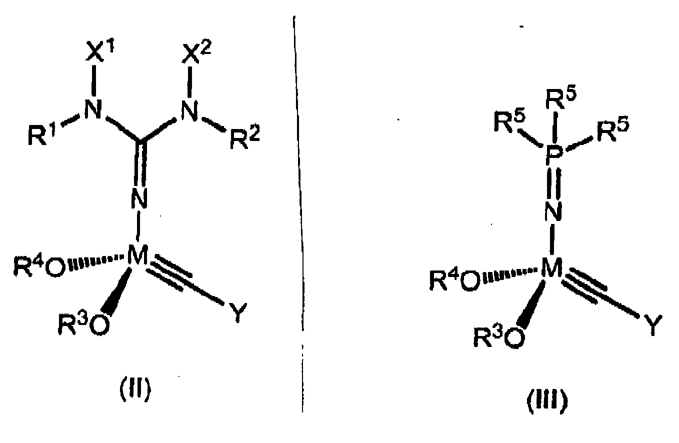
wherein R³, R⁴ are independently selected from C1 (hetero-) alkyl or (hetero-) aryl to C20 (hetero-) alkyl or (hetero-) aryl,
M is a transition metal atom preferably Mo or W, and
Y is selected from C1 alkyl or aryl to C20 alkyl or aryl.
R¹, R², are independently selected from hydrogen and C1 (hetero-) alkyl or (hetero-) aryl to C20 (hetero-) alkyl or (hetero-) aryl, and
X¹, X² are independently selected from H, C1 (hatero-) alkyl or (hetero-) aryl to C20 (hetero-) alkyl or (hetero-) aryl, and
each R⁵ is independently selected from hydrogen and C1 to C20 alkyl.

2. Compound of formula II according to claim 1, wherein R¹, R² are independently selected from Me, CHMe₂, CMe₃, and 2,4,6-Me₃-C₆H₂, and 2,6-*i*Pr₂-C₄H₃.

3. Compound of formula II according to one of claims 1 and 2, wherein X¹ and X² are replaced by groups comprising two, three or four carbon atoms arranged linearly to form a 5-membered, a 6-membered or a 7-membered ring, respectively.

4. Compound of formula II according to claim 3, wherein X¹ and X² are replaced by one of the groups selected from CH₂-CH₂, C(R¹)=C(R¹), C(R¹)-C(R¹)-C(R¹), and C=C-C(R¹).

5. Compound according to claim 1, wherein R³, R⁴ are selected from CMe₃, CH(CF₃)₂, CMe₂CF₃, CMe(CF₃)₂, C(CF₃)₃, 2,4,6-(CF₃)-C₆H₂, and 2,6-(CF₂)-C₆H₃.

6. Compound according to one of the preceding claims, wherein Y is selected from tert.-butyl and phenyl.

7. Process for the conversion of alkynes, **characterized by** the presence of a compound according to one of the preceding claims as catalyst.

8. Process according to claim 7, **characterized by** a pressure of 100 to 500 mbar absolute,

9. Process according to one of claims. 7 and 8, **characterized by** a temperature of 10 °C to , 100 °C.

10. Use of a compound according to one of claims 1 to 6 for the metathesis of alkynes.

## Patentansprüche

1. Verbindung mit einer Struktur von Formel II oder Formel III zur Verwendung in Alkinmetathese-Reaktionen: 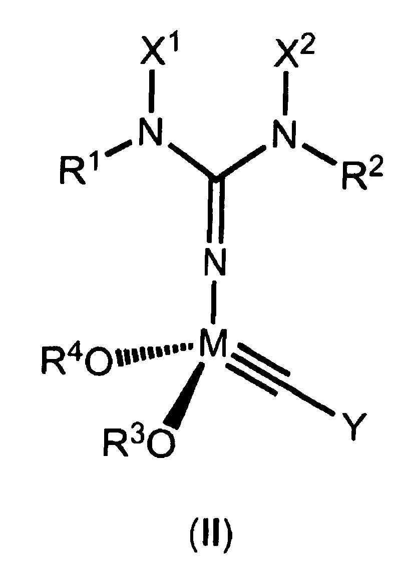 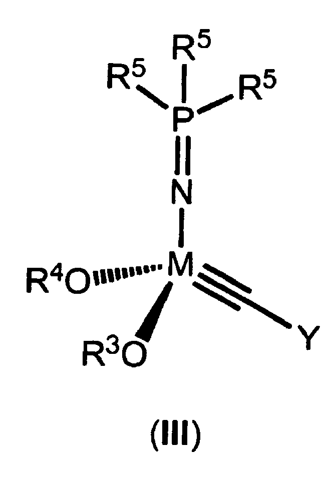
wobei R³, R⁴ unabhängig voneinander ausgewählt sind aus C1 (Hetero-)alkyl oder (Hetero-)aryl bis C20 (Hetero-)alkyl oder (Hetero-)aryl,
M ein Übergangsmetallatom ist, vorzugsweise Mo oder W, und
Y ausgewählt ist aus C1 Alkyl oder Aryl bis C20 Alkyl oder Aryl,
R¹, R² unabhängig voneinander ausgewählt sind aus Wasserstoff und C1 (Hetero-)alkyl oder (Hetero-)aryl bis C20 (Hetero-)alkyl oder (Hetero-)aryl, und
X¹, X² unabhängig voneinander ausgewählt sind aus H, C1 (Hetero-)alkyl oder (Hetero-)aryl bis C20 (Hetero-)alkyl oder (Hetero-)aryl, und
jedes R5 unabhängig voneinander ausgewählt ist aus Wasserstoff und C1 bis C 20 Alkyl.

2. Verbindung nach Formel II gemäß Anspruch 1, wobei R¹, R² unabhängig voneinander aus Me, CHMe₂, CMe₃, und 2,4,6-Me₃-C₆H₂ und 2,6-*i*Pr₂-C₆H₃ ausgewählt sind.

3. Verbindung nach Formel II gemäß einem der Ansprüche 1 und 2, wobei X¹ und X² durch Gruppen ersetzt sind, die zwei, drei oder vier Kohlenstoffatome umfassen, die linear angeordnet sind, um einen 5-gliedrigen, einen 6-gliedrigen oder einen 7-gliedrigen Ring zu bilden.

4. Verbindung nach Formel II gemäß Anspruch 3, wobei X¹ und X² durch eine der Gruppen, ausgewählt unter CH₂-CH₂, C(R¹)=C(R¹), C(R¹)-C(R¹)-C(R¹), und C=C-C(R¹), ersetzt sind.

5. Verbindung nach Anspruch 1, wobei R³, R⁴ aus CMe₃, CH(CF₃)₂, CMe₂CF₃, CMe(CF₃)₂, C(CF₃)₃, 2,4,6-(CF₃)-C₆H₂, und 2,6-(CF₃)-C₆H₃ ausgewählt sind.

6. Verbindung nach einem der voranstehenden Ansprüche, wobei Y aus tert.-Butyl und Phenyl ausgewählt ist.

7. Verfahren zur Umsetzung von Alkinen, **gekennzeichnet durch** die Anwesenheit einer Verbindung nach einem der voranstehenden Ansprüche als Katalysator.

8. Verfahren nach Anspruch 7, **gekennzeichnet durch** einen Druck von 100 bis 500 mbar absolut.

9. Verfahren nach einem der Ansprüche 7 und 8, **gekennzeichnet durch** eine Temperatur von 10 °C bis 100 °C.

10. Verwendung einer Verbindung nach einem der Ansprüche 1 bis 6 für die Metathese von Alkinen.

## Revendications

1. Composé d'une structure de formule II ou formule III pour utilisation dans des réactions de métathèse alcyne: 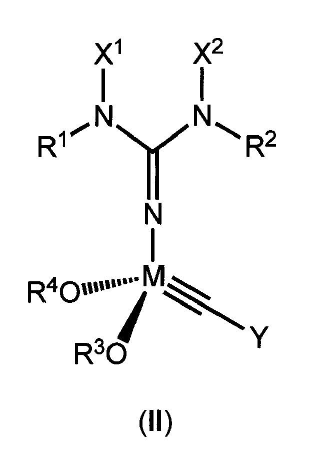 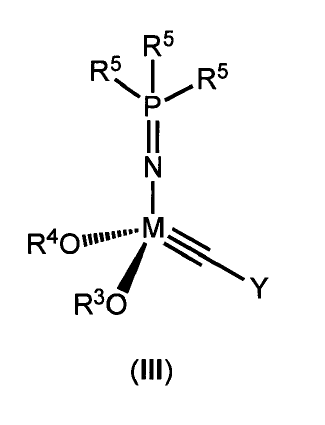
où R³, R⁴ sont indépendamment sélectionnés parmi C1 (hétéro-) alkyle ou (hétéro-) aryle à C20 (hétéro-) alkyle ou (hétéro-) aryle,
M est un atome de métal de transition, de préférence Mo ou W, et
Y est sélectionné parmi C1 alkyle ou aryle à C20 alkyle ou aryle,
R¹, R², sont indépendamment sélectionnés parmi l'hydrogène et C1 (hétéro-) alkyle ou (hétéro-)
aryle à C20 (hétéro-) alkyle ou (hétéro-) aryle, et
X¹, X² sont indépendamment sélectionnés parmi H, C1 (hétéro-) alkyle ou (hétéro-) aryle à C20
(hétéro-) alkyle ou (hétéro-) aryle, et
chaque R⁵ est indépendamment sélectionné parmi l'hydrogène et C1 à C20 alkyle.

2. Composé de formule II selon la revendication 1, où R¹, R² sont indépendamment sélectionnés parmi Me, CHMe₂, CMe₃, and 2,4,6-Me₃-C₆H₂, et 2,6-iPr₂-C₆H₃.

3. Composé de formule II selon l'une des revendications 1 et 2, où X¹ et X² sont remplacés par des groupes comprenant deux, trois ou quatre atomes de carbone disposés de façon linéaire pour constituer un anneau à 5 membres, à 6 membres ou à 7 membres respectivement.

4. Composé de formule II selon la revendication 3, où X¹ et X² sont remplacés par l'un des groupes sélectionnés parmi CH₂-CH₂, C(R¹)=C(R¹), C(R¹)-C(R¹)-C(R¹), et C=C-C(R¹).

5. Composé selon la revendication 1, où R³, R⁴ sont sélectionnés parmi CMe₃, CH(CF₃)₂, CMe₂CF₃, CMe(CF₃)₂, C(CF₃)₃, 2,4,6-(CF₃)-C₆H₂, et 2,6-(CF₃)-C₆H₃.

6. Composé selon l'une des revendications précédentes, où Y est sélectionné parmi le tert-butyle et le phényle.

7. Procédé de conversion des alcynes, **caractérisé par** la présence d'un composé selon l'une des revendications précédentes sous forme de catalyseur.

8. Procédé selon la revendication 7, **caractérisé par** une pression absolue de 100 à 500 mbars.

9. Procédé selon l'une des revendications 7 et 8, **caractérisé par** une température de 10°C à 100°C.

10. Utilisation d'un composé selon l'une des revendications 1 à 6 pour la métathèse des alcynes.
